# EUROPÄISCHE PATENTSCHRIFT

(11) **EP 3 816 113 B1**
(45) Veröffentlichungstag und Bekanntmachung des Hinweises auf die Patenterteilung: **02.08.2023**
(21) Anmeldenummer: 20205640.4
(22) Anmeldetag: 04.11.2020
(51) Int. Cl.: C02F 1/32, B01J 19/12

(54) **VORRICHTUNG ZUR FLÜSSIGKEITSDESINFEKTION**
DEVICE FOR DISINFECTING LIQUID
DISPOSITIF DE DÉSINFECTION DE LIQUIDE

(30) Priorität: 04.11.2019 AT 509402019
(43) Veröffentlichungstag der Anmeldung: 05.05.2021
(73) Patentinhaber: UVAUDES GmbH, 4861 Schörfling am Attersee (AT)
(72) Erfinder: Stadler, Friedrich, 4853 Steinbach am Attersee (AT); Mayr, Martin, 4681 Schörfling am Attersee (AT)
(74) Vertreter: Hübscher & Partner Patentanwälte GmbH

(56) Entgegenhaltungen:
- WO-A1-02/094721
- WO-A1-2017/192080
- DE-B3-102009 039 655
- KR-B1- 100 454 167

## Beschreibung

Die Erfindung bezieht sich auf eine Vorrichtung zur Flüssigkeitsdesinfektion mit in parallelen Hüllrohren untergebrachten UV-Strahlern und mit wenigstens einem entlang der Hüllrohre verschiebbar geführten Schlitten, der die Hüllrohre ringförmig umschließende, geschlitzte oder schraubenförmig gewendelte Reinigungselemente aufweist, die in einer Umfangsnut geschlitzter, mit radialem Spiel im Schlitten gelagerter Gehäuseringe gehalten sind.

Zur Flüssigkeitsdesinfektion mithilfe einer UV-Strahlung wird die zu behandelnde Flüssigkeit, beispielsweise Wasser, durch ein eine Bestrahlungskammer bildendes, zylindrisches Gehäuse mit UV-Strahlern geführt, die gegenüber der zu behandelnden Flüssigkeit geschützt in zueinander parallel angeordneten Hüllrohren aus Quarzglas untergebracht sind. Die sich aus der zu behandelnden Flüssigkeit mit der Zeit an den Hüllrohren anlagernden Stoffe beeinträchtigen den Durchtritt der UV-Strahlung durch die Hüllrohre, die daher wartungsbedingt gereinigt werden müssen. Hierfür sind Reinigungseinrichtungen bekannt, die die Ablagerungen mechanisch von den Hüllrohren abtragen, beispielsweise mithilfe von die Hüllrohre unter Vorspannung umschließenden Wischerringen oder Ringbürsten. Diese ringförmigen Reinigungselemente sind in einem Schlitten gelagert, der parallel zu den Hüllrohren verschiebbar geführt wird und mit einem Stellantrieb verbunden ist. Da die Hüllrohre aus Quarzglas eine vergleichsweise große Fertigungstoleranz aufweisen, muss bei der Ausgestaltung der die Hüllrohre umschließenden Reinigungselemente diese Fertigungstoleranz berücksichtigt werden, um eine gleichmäßige Reinigungswirkung sowohl über die Länge als auch über den Umfang der Hüllrohre zu ermöglichen.

Zu diesem Zweck ist es bekannt (WO 02/094721 A1), gummielastische Wischerringe mit einem vorzugsweise rechteckigen Querschnitt und einem Innendurchmesser einzusetzen, der im entspannten Zustand der Wischerringe kleiner als der Außendurchmesser der Hüllrohre ist. Um einer Verformung dieser Wischerringe während der axialen Bewegung gegenüber den Hüllrohren entgegenzuwirken, werden die Wischerringe zwischen je zwei schraubenförmig gewendelten Stützringen gehalten, deren Innendurchmesser ebenfalls kleiner als der Außendurchmesser der Hüllrohre ist und die deshalb auch Reinigungselemente darstellen. Aufgrund der möglichen Aufweitung der Schraubenwendel dieser Stützringe sowie der gummielastischen Eigenschaften der Wischerringe können diese Ringelemente der Oberflächenstruktur der Hüllrohre folgen, zumal diese Ringelemente mit radialem Spiel in eine gegen die Hüllrohre offene Ringnut von Gehäuseringen eingesetzt sind und somit auch als Ganzes innerhalb des radialen Spiels verlagert werden können.

Zur Reinigung der Hüllrohre von UV-Strahlern ist es auch bekannt (DE 10 2009 039 655 B3), einen elastischen Abstreifring vorzusehen, der mit Dichtlippen am Hüllrohr anliegt und in einer Nut eines Gehäuserings angeordnet ist, wobei zwischen dem Abstreifring und dem Grund dieser Nut ein radialer Ringspalt freibleibt, der mit einer Flüssigkeit beaufschlagbar ist, um auf den Abstreifring einen radialen Druck ausüben zu können. Dies bedeutet, dass weder der Abstreifring noch der Gehäusering 2 geschlitzt sein dürfen, weil sonst keine radiale Druckbeaufschlagung des Abstreifrings möglich wäre.

Nach der WO 2017/192080 A1 ist eine das Hüllrohr umschließende Hülse aus einem Faserwerkstoff vorgesehen, zwischen der und einem zylindrischen Gehäuse eine Hülse aus einem vorzugsweise offenporigen Schaumstoff unter radialer Vorspannung eingesetzt ist, um die das Reinigungselement ausbildende Hülse einem radialen Beaufschlagungsdruck aussetzen zu können.

Zur radialen Vorspannung eines das Hüllrohr umschließenden Reinigungsrings mit zwei sich am Hüllrohr abstützenden Abstreiflippen ist es außerdem bekannt (KR 199 454 167 B1), den Reinigungsring mithilfe eines elastischen Spannrings zu beaufschlagen. Da der Reinigungsring jedoch in sich geschlossen ist, kann nur begrenzt eine radiale Vorspannkraft auf die Abstreiflippen aufgebracht werden.

Um den mit der Anordnung einer Vielzahl von Bürstenelementen zu einer Ringbürste verbundenen Aufwand zu vermeiden ist es auch bekannt (US 2004/0216254 A1), diese Bürstenelemente durch elastische Brücken zu einer Ringbürste zu verbinden, die in eine gegenüber dem Hüllrohr offene Umfangsnut eines Gehäuserings eingesetzt ist und aufgrund der elastischen Brücken unter Vorspannung an die Hüllrohre angedrückt wird.

Um Ringbürsten mit einer erforderlichen Vorspannung über längere Zeitspannen an die Hüllrohre radial anstellen zu können, ist ein geschlossener Ring erforderlich, der jedoch nicht in die nach innen offene Ringnut eines Gehäuserings eingesetzt werden kann. Mit einer zu diesem Zweck geschlitzten Ringbürste ergibt sich die Notwendigkeit der radialen Abstützung dieser geschlitzten Ringelemente am Nutengrund des Gehäuserings, was für eine radiale Ringverlagerung wiederum eine radiale Verlagerungsmöglichkeit des Gehäuserings im Schlitten erfordert. Dieser Forderung kann durch eine Lagerung des Gehäuserings mit radialem Spiel entsprochen werden. Um diese Lagerung nicht zweiteilig ausführen zu müssen, bedeutet dies wiederum, dass auch der Gehäusering geschlitzt ausgeführt werden muss. Mit einem geschlitzten Gehäusering und geschlitzten ringförmigen Reinigungselementen lässt sich jedoch kein ausreichender radialer Anpressdruck dieser Reinigungselemente an den Hüllrohren über längere Zeitspannen aufrecht erhalten.

Der Erfindung liegt somit die Aufgabe zugrunde, eine Vorrichtung zur Flüssigkeitsdesinfektion mit einer Reinigungseinrichtung zu versehen, die eine gute mechanische Reinigung der Hüllrohre für die UV-Strahler auch über längere Zeitabschnitte erlaubt.

Ausgehend von einer Vorrichtung zur Flüssigkeitsdesinfektion der eingangs geschilderten Art, löst die Erfindung die gestellte Aufgabe dadurch, dass die ringförmigen Reinigungselemente am Nutengrund der sie aufnehmenden Umfangsnut anliegen und dass die geschlitzten Gehäuseringe mit elastischen Spannringen unter Vorspannung umschlossen sind.

Durch diese Maßnahmen wird es möglich über die geschlitzten Gehäuseringe radialen Druck auf die ringförmigen Reinigungselemente auszuüben, sodass diese Reinigungselemente unabhängig von ihren elastischen Eigenschaften an die Hüllrohre angedrückt werden können. Die für einen guten Reinigungsabtrag erforderliche Andrückkraft wird ja durch die hierfür ausgelegten, elastischen Spannringe sichergestellt, die die geschlitzten Gehäuseringe unter einer entsprechenden Vorspannung umschließen. Über die Gehäuseringe wird somit ein radialer Druck auf die ringförmigen Reinigungselemente ausgeübt, die am Nutengrund der sie aufnehmenden, gegen die Hüllrohre offenen Umfangsnut der Gehäuseringe anliegen, und zwar unabhängig davon, ob diese ringförmigen Reinigungselemente als geschlitzte Ringbürsten oder als schraubenförmig gewendelte Reinigungsringe ausgebildet sind. Die Gehäuseringe selbst sind unabhängig von der durch die Spannringe aufgebrachten Vorspannung innerhalb des vorgegebenen radialen Lagerspiels im Schlitten frei schwimmend gelagert.

Zur Verbesserung der Reinigungswirkung können gummielastischer Wischerringe mit zwei Abstreiflippen in einem axialen Abstand voneinander in einer gegenüber der Umfangsnut für die ringförmigen Reinigungselemente axial versetzten, koaxialen Ringnut vorgesehen werden, Diese zufolge der eigenen elastischen Vorspannung an den Hüllrohren anliegenden, gummielastischen Wischerringe stützen sich über die beiden Abstreiflippen gegen ein Verkanten an den Hüllrohren ab, sodass sich zusätzliche Stützringe erübrigen. Außerdem ergeben sich in Verschieberichtung aufeinanderfolgende Abstreifkanten, die die Reinigungswirkung im Zusammenwirken mit dem im selben Gehäusering untergebrachten ringförmigen Reinigungselement erheblich verbessern.

Um vorteilhafte elastische Verformungen im Bereich der an den Hüllrohren anliegenden Abstreiflippen der Wischerringe zu erreichen, können die beiden Abstreiflippen der Wischerringe im Querschnitt V-förmig auseinanderlaufen. Diese Querschnittsform der Abstreiflippen ermöglicht bei einem entsprechenden radialen Anpressdruck einen für das Abreinigen der Hüllrohre vorteilhaften Anstellwinkel der Abstreiflippen.

Um den radialen Anpressdruck der gummielastischen Wischerringe zu erhöhen, können auch die Wischerringe über den Spannring der geschlitzten Gehäuseringe zusätzlich mit einer radialen Vorspannung beaufschlagt werden, was unter Umständen auch den Einsatz geschlitzter Wischerringe erlaubt. Voraussetzung ist, dass die Wischerringe am Nutengrund der sie aufnehmenden Ringnut der geschlitzten Gehäuseringe anliegen. Um in einem solchen Fall die radiale elastische Verformbarkeit der Wischerringe zu verbessern, können die Wischerringe mit über den Umfang verteilten Ausnehmungen versehen sein, beispielsweise in Form von axialen Durchtrittsöffnungen im Ringkörper.

In der Zeichnung ist der Erfindungsgegenstand beispielsweise dargestellt. Es zeigen
- Fig. 1: eine erfindungsgemäße Vorrichtung zur Flüssigkeitsdesinfektion ausschnittsweise in einem schematischen Längsschnitt,

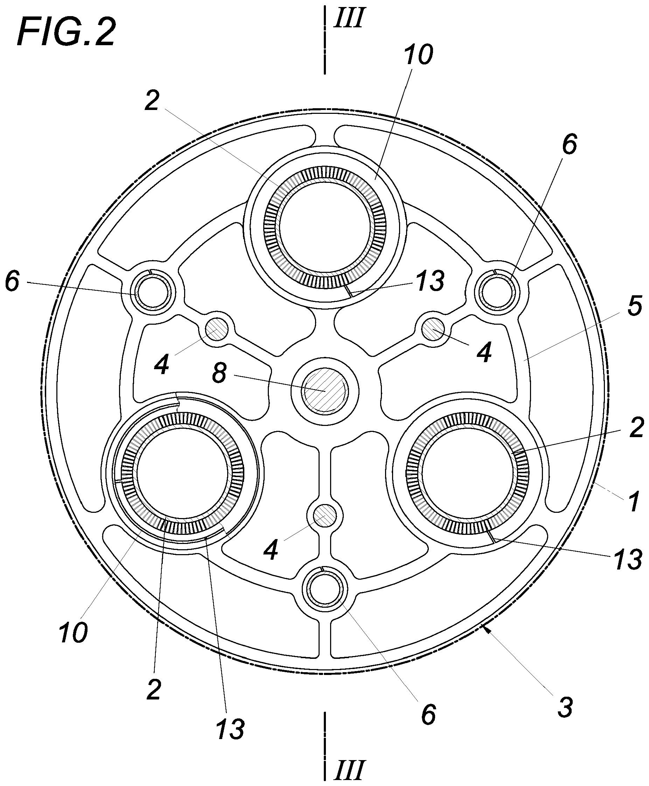

- Fig. 2: diese Vorrichtung in einem Schnitt nach der Linie II-II der Fig. 1 und
- Fig. 3: einen Querschnitt durch einen Gehäusering entlang der Linie III-III der Fig. 2 in einem größeren Maßstab.

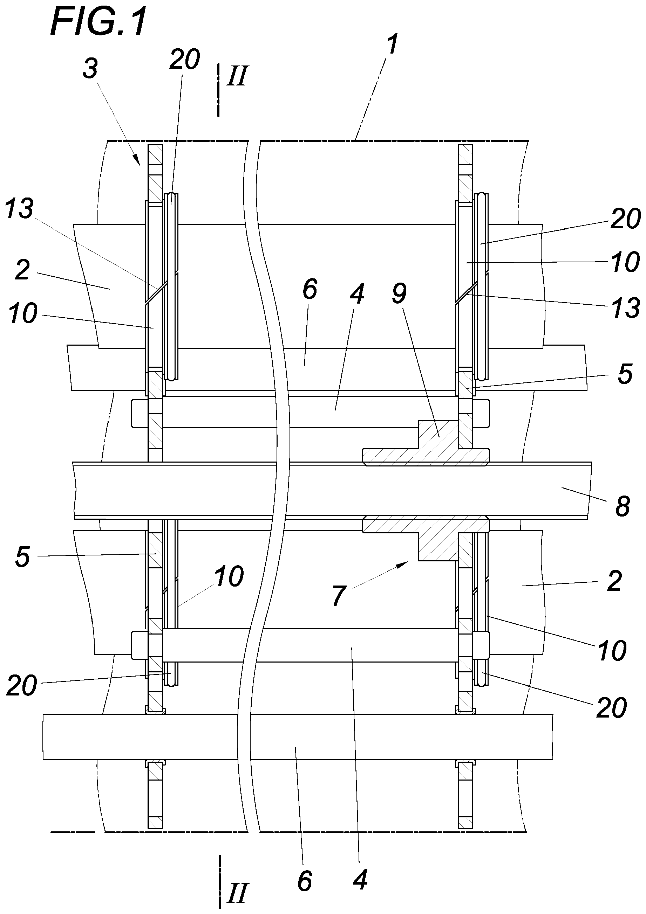

Die dargestellte Vorrichtung zur Flüssigkeitsdesinfektion weist ein von der zu behandelnden Flüssigkeit, beispielsweise Wasser, durchströmtes, strichpunktiert angedeutetes, zylindrisches Gehäuse 1 auf, das eine Reaktionskammer mit über den Querschnitt verteilten, achsparallelen Hüllrohren 2 aus Quarzglas bildet, in denen UV-Strahler geschützt gegenüber der zu behandelnden Flüssigkeit angeordnet sind. Zur Reinigung dieser Hüllrohre 2 ist eine Reinigungseinrichtung vorgesehen, die einen Schlitten 3 mit in einem axialen Abstand voneinander angeordneten und durch Verbindungsstangen 4 miteinander verbundenen Käfigen 5 umfasst. Dieser Schlitten 3 ist auf achsparallelen Führungsrohren 6 verschiebbar geführt und an einen Stelltrieb 7 angeschlossen, der gemäß der Fig. 1 eine drehbar aber unverschiebbar im Gehäuse 1 gelagerte Spindel 8 und eine im Schlitten 3 undrehbar gehaltene Spindelmutter 9 aufweist.

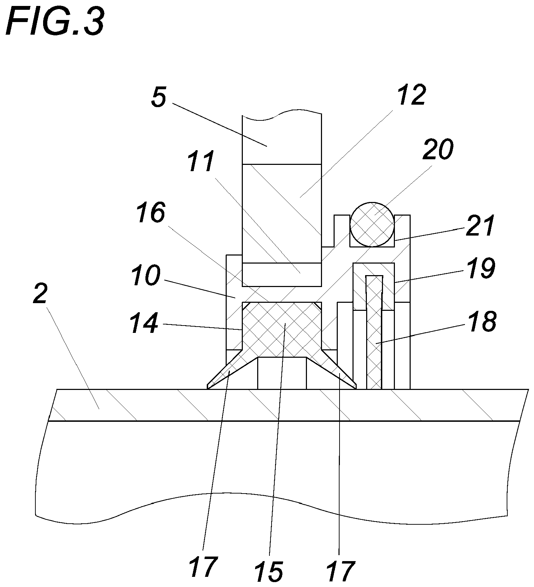

In den mit axialem Abstand voneinander angeordneten Käfigen 5 des Schlittens 3 sind geschlitzte Gehäuseringe 10 mit radialem Spiel gelagert, die die Hüllrohre 2 umschließen. Wie insbesondere der Fig. 3 entnommen werden kann, bilden die Gehäuseringe 10 eine nach außen offene Umfangsnut 11, in die ein durch den jeweiligen Käfig 5 gebildeter Lagerring 12 eingreift. Aufgrund der insbesondere in der Fig. 1 ersichtlichen, zur Gehäuseachse geneigt verlaufenden Schlitzführung 13 können die Gehäuseringe 10 in ihrem Außendurchmesser unter einem gleichzeitigen axialen Aufspreizen der einander entlang der Schlitzführung 13 gegenüberliegenden Ringenden in ihrem Durchmesser so verkleinert werden, dass sie in die Lagerringe 12 eingeführt werden können, in denen sie nach einem Aufweiten axial gesichert mit radialem Spiel gehalten werden.

Die Gehäuseringe 10 weisen eine gegen das jeweilige Hüllrohr 2 offene Ringnut 14 auf, in die ein gummielastischer Wischerring 15 so eingesetzt ist, dass er sich am Nutengrund 16 radial abstützt und mit zwei V-förmig auseinanderlaufenden Abstreiflippen 17 unter Vorspannung am Hüllrohr 2 anliegt.

Neben dem Wischerring 15 sind die Gehäuseringe 10 mit einer geschlitzten Ri8ngbürste 18 ausgerüstet, die in eine gegenüber der Ringnut 14 für den Wischerring 15 axial versetzte, koaxiale Umfangsnut 19 eingesetzt ist. Die geschlitzten Ringbürsten 18 werden unter einem axialen Auseinanderziehen der einander bezüglich der geneigten Schlitzführung gegenüberliegenden Enden in ihrem Durchmesser verkleinert, um sie in die gegenüber den Hüllrohren 2 offene Umfangsnut 19 der Gehäuseringe 10 einsetzen zu können.

Die geschlitzte Ausführung nicht nur der Gehäuseringe 10, sondern auch der Ringbürsten 18 bedingt, dass über die Eigenelastizität dieser geschlitzten Ringe keine dauerhaft wirksame, für eine ausreichende Reinigungswirkung durch ein Abschaben von Ablagerungen auf den Hüllrohren 2 erforderliche Vorspannung aufgebracht werden kann. Die federnde Anpresskraft für die Ringbürsten 18 an die äußere Oberfläche der Hüllrohre 2 wird unabhängig von den elastischen Eigenschaften dieser Ringbürsten 18 durch elastische Spannringe 20 aufgebracht, die die Gehäuseringe 10 in einer Außennut 21 umschließen und so ausgelegt sind, dass über die geschlitzten Gehäuseringe 10 ein den jeweiligen Anforderungen entsprechender radialer Druck auf die Ringbürsten 18 ausgeübt werden kann. Voraussetzung hierfür ist selbstverständlich, dass die einander entlang der Schlitzführung gegenüberliegenden Enden der Ringe nicht aneinander anliegen und ein Bewegungsspiel in Umfangsrichtung freigeben.

Werden anstelle von Ringbürsten 18 oder zusätzlich in gesonderten Umfangsnuten ringförmige Reinigungselemente in Form von schraubenförmig gewendelten Ringen eingesetzt, so kann über die Spannringe 20 und die geschlitzten Gehäuseringe 10 auch auf diese schraubenförmig gewendelten Ringe eine radiale Anpresskraft an die Hüllrohre 2 ausgeübt werden, weil sich aufgrund der schraubenförmigen Wendelung dieser Ringe der Durchmesser der Schraubenwindungen bei einer radialen Einspannung verkleinern lässt.

Da die Wischerringe 15 am Nutengrund 16 der sie aufnehmenden Ringnuten 14 der geschlitzten Gehäuseringe 10 anliegen, werden sie wie die Ringbürsten über das Gehäuse mit einer radialen Druckkraft beaufschlagt. Um dabei die Anlage der Abstreiflippen 17 an den Hüllrohren 2 vorteilhaft zu nützen, können die Wischerringe 15 mit über den Umfang verteilten Ausnehmungen versehen sein, die die radiale Verformbarkeit der Wischerringe 15 entsprechend verbessern.

## Patentansprüche

1. Vorrichtung zur Flüssigkeitsdesinfektion mit in parallelen Hüllrohren (2) untergebrachten UV-Strahlern und mit wenigstens einem entlang der Hüllrohre (2) verschiebbar geführten Schlitten (3), der die Hüllrohre (2) ringförmig umschließende, geschlitzte oder schraubenförmig gewendelte Reinigungselemente (18) aufweist, die in einer Umfangsnut (19) geschlitzter, mit radialem Spiel im Schlitten (3) gelagerter Gehäuseringe (10) gehalten sind, **dadurch gekennzeichnet, dass** die ringförmigen Reinigungselemente (18) am Nutengrund der sie aufnehmenden Umfangsnut anliegen und dass die geschlitzten Gehäuseringe (10) mit elastischen Spannringen (20) unter Vorspannung umschlossen sind.

2. Vorrichtung nach Anspruch 1, **dadurch gekennzeichnet, dass** die Gehäuseringe (10) einen gummielastischen Wischerring (15) mit zwei in einem axialen Abstand voneinander angeordneten Abstreiflippen (17) in einer gegenüber der Umfangsnut (19) für die ringförmigen Reinigungselemente (18) axial versetzten, koaxialen Ringnut (14) aufnehmen.

3. Vorrichtung nach Anspruch 2, **dadurch gekennzeichnet, dass** die beiden Abstreiflippen (17) der Wischerringe (15) im Querschnitt V-förmig auseinanderlaufen.

4. Vorrichtung nach Anspruch 2 oder 3, **dadurch gekennzeichnet, dass** die am Grund der Ringnuten (14) der Gehäuseringe (10) anliegenden Wischerringe (15) über den Umfang verteilte Ausnehmungen aufweisen.

## Claims

1. Device for liquid disinfection having UV emitters, which are housed in parallel casing tubes (2), and having at least one carriage (3) which is displaceably guided along the casing tubes (2) and which comprises slit or helically wound cleaning elements (18) which annularly surround the casing tubes (2) and which are held in a peripheral groove (19) of slit housing rings (10) mounted in the carriage (3) with radial clearance, **characterised in that** the annular cleaning elements (18) lie against the groove bottom of the peripheral groove receiving them, and **in that** the slit housing rings (10) are surrounded with elastic tension rings (20) under pretensioning.

2. Device as claimed in claim 1, **characterised in that** the housing rings (10) receive a rubber-elastic wiping ring (15) with two mutually axially spaced stripping lips (17) in a coaxial annular groove (14) axially offset with respect to the peripheral groove (19) for the annular cleaning elements (18).

3. Device as claimed in claim 2, **characterised in that** the two stripping lips (17) of the wiping rings (15) extend apart from each other in a V shape in cross-section.

4. Device as claimed in claim 2 or 3, **characterised in that** the wiping rings (15) lying against the bottom of the annular grooves (14) of the housing rings (10) comprise apertures distributed over the periphery.

## Revendications

1. Dispositif pour la désinfection de liquides avec des émetteurs UV logés dans des tubes de protection (2) et avec au moins une glissière (3) guidée de façon coulissante le long des tubes de protection (2), qui comporte des éléments de nettoyage (18) fendus ou enroulés en hélice encerclant les tubes de protection (2) qui sont maintenus dans une rainure périphérique (19) d'anneaux de boîtier fendus (10) logés dans la glissière (3) avec un jeu radial, **caractérisé en ce que** les éléments de nettoyage annulaires (18) s'appuient sur le fond de la rainure périphérique les accueillant et que les anneaux de boîtier fendus (10) sont enfermés sous précontrainte avec des bagues de serrage élastiques (20).

2. Dispositif selon la revendication 1, **caractérisé en ce que** les anneaux de boîtier (10) accueillent une bague d'essuyage (15) en caoutchouc élastique avec deux lèvres de raclage (17) espacées axialement entre elles dans une rainure annulaire (14) coaxiale décalée axialement par rapport à la rainure périphérique (19) pour les éléments de nettoyage annulaires (18).

3. Dispositif selon la revendication 2, **caractérisé en ce que** les deux lèvres de raclage (17) des bagues d'essuyage (15) s'écartent l'une de l'autre en V dans la section transversale.

4. Dispositif selon la revendication 2 ou 3, **caractérisé en ce que** les bagues d'essuyage (15) s'appuyant au fond des rainures annulaires (14) des anneaux de boîtier (10) présentent des cavités réparties sur la périphérie.
